# EUROPEAN PATENT SPECIFICATION

(11) **EP 1 087 826 B1**
(45) Date of publication and mention of the grant of the patent: **21.05.2008**
(21) Application number: 00915508.6
(22) Date of filing: 13.04.2000
(51) Int. Cl.: A63F 13/12

(54) **ENTERTAINMENT SYSTEM AND DATA COMMUNICATION NETWORK SYSTEM**
UNTERHALTUNGSSYSTEM UND DATENKOMMUNIKATIONNETZWERKSYSTEM
SYSTEME DE LOISIRS ET SYSTEME DE RESEAU DE COMMUNICATIONS DE DONNEES

(30) Priority: 14.04.1999 JP 10665899
(43) Date of publication of application: 04.04.2001
(73) Proprietor: Sony Computer Entertainment Inc., Tokyo 107-0052 (JP)
(72) Inventor: CHATANI, Masayuki, Minato-ku, Tokyo 107-0052 (JP)
(74) Representative: Hedley, Nicholas James Matthew
(86) International application number: PCT/JP2000/002408
(87) International publication number: WO 2000/061253

(56) References cited:
- US-A- 5 668 591
- US-A- 5 795 228
- PATENT ABSTRACTS OF JAPAN vol. 1999, no. 01, 29 January 1999 (1999-01-29) & JP 10 271562 A (TAITO CORP), 9 October 1998 (1998-10-09)
- PATENT ABSTRACTS OF JAPAN vol. 013, no. 362 (C-625), 14 August 1989 (1989-08-14) & JP 01 119337 A (MITSUBISHI HEAVY IND LTD), 11 May 1989 (1989-05-11)

## Description

### Field of the Invention

The present invention relates to an entertainment system and a data communication network system. More particularly, this invention is concerned with an entertainment system and a data communication network system enabling a user to acquire desired information. Herein, an Internet system, a local area network (LAN) system, a wide area network (WAN) system, a wireless paging system (may also be called a "pocket bell system" or "pager system") or the like is used to make an unprecedented commitment to adapt the entertainment system to communication network terminals.

### Background of Invention

Recently, a LAN over which computers are interconnected and utilized within a limited region and a WAN that is a development of the LAM and utilizes telephone lines are widely adopted as computer networks. Moreover, the Internet having computer networks interconnected has been constructed.

Portable information communication terminals (personal digital assistants (PDA)), for example, an electronic pocketbook, a portable telephone, a personal handyphone system, and a wireless reading system (pager) are widely utilized.

An entertainment apparatus has widely prevailed. A large-capacity recording medium such as a CD-ROM is mounted on the entertainment apparatus in order to download software including programs. Thus, games are executed or music is reproduced. Portable game machines detachably attached to a main unit that is the entertainment apparatus have been put to practical use.

A portable game machine consists basically of a programmable memory such as a flash memory and a CPU. When the portable game machine is attached to the main unit of the entertainment apparatus, game software is downloaded from the entertainment apparatus into the memory in the portable game machine. Thereafter, the portable game machine is detached from the entertainment apparatus. Games or the like can now be executed by running the game software downloaded into the memory.

To date, it has not been proposed that an entertainment system composed of the entertainment apparatus and portable game machine is adapted to information communication terminal equipment. In this sort of entertainment system, the entertainment apparatus serves as a main unit and the portable game machine is detachably attached to the entertainment apparatus in order to download game software.

The entertainment apparatus and portable game machine are intended to enable a user to reproduce game software and thus execute and enjoy the game. The game is, for example, a shooting game, a role playing game, and an action game. The entertainment apparatus and portable game machine are used merely as dedicated software reproduction equipment having a display unit and an operator unit.

WO98/03006 discloses a paging network routing management system in which a subscriber to a two-way paging system is able to manage the menu choices for call forwarding that are displayed on the subscriber's two-way pager. Updated menu options are relayed to the subscriber's pager via a paging service. When the subscriber selects the options to be displayed in the pager menu, the subscriber can choose from a larger set of options already stored on a CRP database, modify existing options, and/or create new call forwarding options.

### SUMMARY OF THE INVENTION

An object of the present invention is to break through the foregoing current situation and to provide an entertainment system and a data communication network system intended to achieve an unprecedented technological development. Herein, the aforesaid computer network and portable information communication terminal are utilized and the entertainment system is used as an information communication terminal.

Another object of the present invention is to provide an entertainment system and a data communication network system in which a portable information communication terminal and the entertainment system complement each other so as to realize a novel facility.

Still another object of the present invention is to provide an entertainment system and a data communication network system in which the usefulness of a portable information communication terminal and that of the entertainment system are upgraded.

A communication network system in accordance with the present invention is defined in the accompanying claims and consists of an entertainment system and a computer system. The entertainment system consists of at least two pairs of an entertainment apparatus and a portable information communication terminal having a wireless reception facility and being connected to the entertainment apparatus. The computer system acts as a server and may be connected to a database. The entertainment apparatuses and the computer system are connected to each other over a bi-directional communication network. The computer system and portable information communication terminals are connected to each other over a unidirectional network. In response to a service request sent from the entertainment apparatus to the computer system, the computer system transmits the results of data processing to the portable information communication terminal.

One of the computer systems may act as a server, while the other computer system may be connected to a database. The computer systems are connected to each other so that they can transfer data.

An entertainment apparatus belonging to one entertainment system originates a message to the computer system. In response to the message, the computer system processes data and specifies the destination of the message. The computer system transfers the message to a portable information communication terminal belonging to the other entertainment system. The portable information communication terminal having received the message transfers the message to an entertainment apparatus connected thereto. In response to the message, the entertainment apparatuses originate a reply message to the computer system. In response to the reply message, the computer system processes data and specifies the destination of the reply message. The computer system transfers the reply message to the portable information communication terminal belonging to the entertainment system that has initially originated the message. The portable information communication terminal having received the reply message transfers the reply message to the entertainment apparatus connected thereto. Thus, an asynchronous message exchange system is constructed.

A communication network system in accordance with the present invention consists of an entertainment system and a computer system. Herein, the entertainment system consists of at least three entertainment systems. In response to a service request sent from an entertainment apparatus belonging to one of the entertainment systems to the computer system, the computer system transmits the results of data processing to portable information communication terminals belonging to the other entertainment systems. Thus, an asynchronous data summation and results distribution system is constructed.

The present invention also provides a communication method for communication network systems as set out in the accompanying claims.

Furthermore, according to the present invention, a plurality of pairs of an entertainment apparatus and a portable information communication terminal is included.

The entertainment apparatus runs software recorded in a recording medium that can be mounted or dismounted freely, and serves as a client over at least one of wired and wireless bi-directional communication networks. The portable information communication terminal is connected by wireless to the entertainment apparatus, and transmits or receives information to or from the entertainment apparatus over a unidirectional communication network. The entertainment apparatuses belonging to the plurality of pairs of the entertainment apparatus and portable information communication terminal each originate a message over the bi-directional communication network. A computer system acting as a server over the bi-directional communication network and a computer system connected to the computer system and processing at least one of data and a database accumulate and summate data, and distribute the results of data summation over the unidirectional communication network. The plurality of portable information terminals connected by wireless to the paired entertainment apparatuses transfers the received message to the paired entertainment apparatuses over the unidirectional communication network.

Furthermore, according to the present invention, an entertainment system consists of an entertainment apparatus and a portable information communication terminal. The entertainment apparatus runs software recorded in a recording medium that can be mounted or dismounted freely, and serves as a client over at least one of wired and wireless bi-directional communication networks. The portable information communication terminal is connected by wireless to the entertainment apparatus, and transmits or receives information to or from the entertainment apparatus over a unidirectional communication network. A computer system acts as a server for receiving input data originated from the entertainment apparatus over the bi-directional communication network. A computer system is connected to the computer system acting as a server, processes data in response to a command sent from the computer system acting as a server, and transmits the results of data processing to the portable information communication terminal over the unidirectional communication network. The computer system processes at least one of data and a database.

According to the present invention, an entertainment system consists of two pairs of an entertainment apparatus and a portable information communication terminal. The entertainment apparatus runs software recorded in a recording medium that can be mounted or dismounted freely, and acts as a client over at least one of wired and wireless bi-directional communication networks. The portable information communication terminal is connected by wireless to the entertainment apparatus and transmits or receives information to or from the entertainment apparatus over a unidirectional communication network. A computer system acts as a server for receiving a message originated from the entertainment apparatus over the bi-directional communication network. A computer system is connected to the computer system acting as a server, and processes data and specifies the destination of the message in response to a command sent from the computer system acting as a server. The computer system then transmits the results of data processing to the specified portable information terminal over the unidirectional communication network. The computer system thus processes at least one of data and a database. The entertainment apparatus serving as the source of the message and the portable information communication terminal serving as the destination of the results of data processing are paired with the other portable information communication terminal and entertainment apparatus respectively.

Furthermore, according to the present invention, an entertainment system consists of a plurality of pairs of an entertainment apparatus and a portable information communication terminal. The entertainment apparatus runs software recorded in a recording medium that can be mounted or dismounted freely, and serves as a client over at least one of wired and wireless bi-directional communication networks. The portable information communication terminal is connected by wireless to the entertainment apparatus and transmits or receives information to or from the entertainment apparatus over a unidirectional communication network. A computer system acts as a server for receiving a message originated from the entertainment apparatus over the bi-directional communication network. A computer system is connected to the computer system acting as a server, and accumulates and summates data in response to a command sent from the computer system acting as a server, and distributes the results of summation to the portable information communication terminals over the unidirectional communication network. The computer system thus processes at least one of data and a database.

### BRIEF DESCRIPTION OF THE DRAWINGS

FIG. 1 illustratively shows the configuration of an embodiment of the present invention;
FIG. 2 shows the basic configuration of an embodiment of the present invention;
FIG. 3 is a plan view of a portable information communication terminal;
FIG. 4 is an oblique view of the portable information communication terminal;
FIG. 5 is an oblique view of the portable information communication terminal with a lid opened;
FIG. 6 is an oblique view showing the configuration of an entertainment system;
FIG. 7 is a circuit block diagram of the portable information communication terminal;
FIG. 8 is a circuit block diagram of an entertainment apparatus;
FIG. 9 indicates the logical relationship between the entertainment apparatus and portable information communication terminal connected to the entertainment apparatus;
FIG. 10 shows an example of the configuration of an embodiment of the present invention;
FIG. 11 shows an example of the configuration of an asynchronous message support system in accordance with an embodiment of the present invention; and
FIG. 12 shows an example of the configuration of an asynchronous data summation and results distribution system in accordance with another embodiment of the present invention.

### DESCRIPTION OF THE PREFERRED EMBODIMENTS

Embodiments of an entertainment system and a data communication network system in accordance with the present invention will be described with reference to the appended drawings.

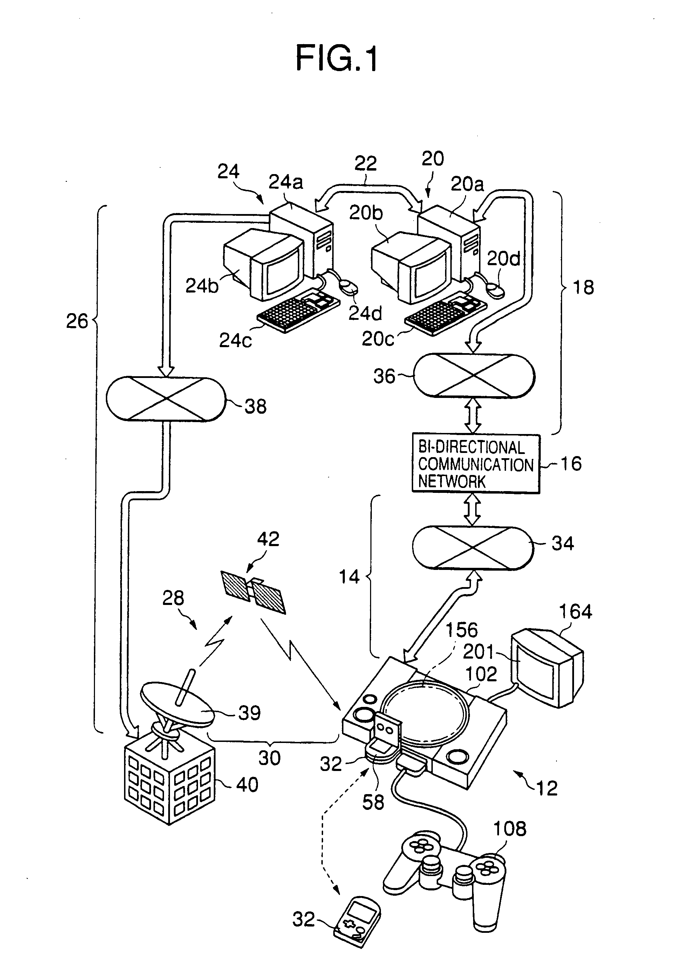

Referring to FIG. 1 to FIG. 12, an embodiment of the present invention will be described below.

### [Basic configuration of a data communication network system]

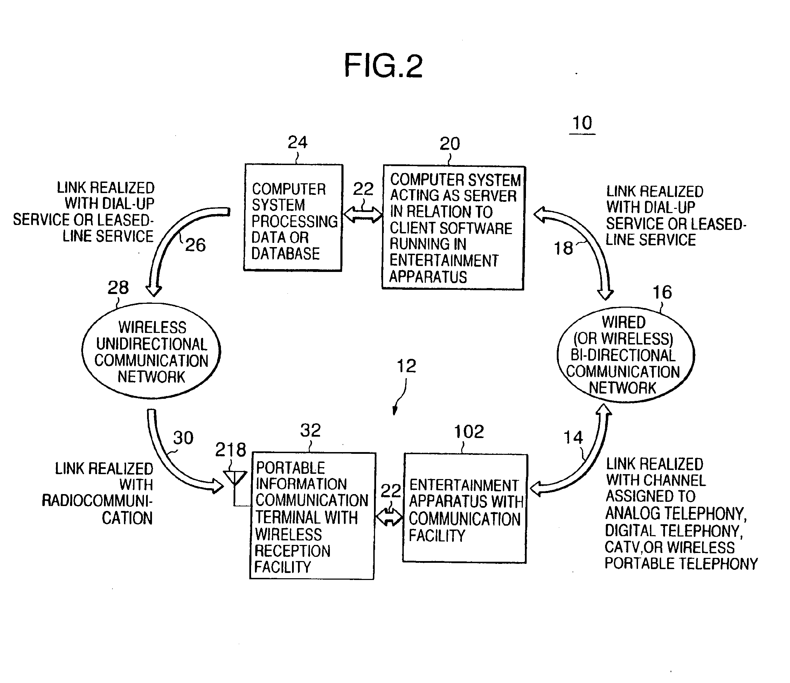

FIG. 1 shows the basic configuration of a data communication network system 10 in which an entertainment system 12 in accordance with an embodiment of the present invention is included. Similarly, FIG. 2 illustratively shows the basic configuration of the data communication network system 10 shown in FIG. 1.

The data communication network system 10 shown in FIG. 1 consists basically of such component systems as the entertainment system 12, a computer system 20 acting as a server, and a computer system 24 processing data or a database. The entertainment system 12 consists broadly of an entertainment apparatus 102 and a portable information communication terminal 32 connectable to the entertainment apparatus through a connector or through radio-communication or wireless communication. The data communication network system 10 further includes as communication systems a wired or wireless bi-directional communication network 16 and a wireless unidirectional communication network 28. The entertainment apparatus 102 and computer system 20 are connected to each other over the bi-directional communication network 16. The computer system 24 and portable information communication terminal 32 are connected to each other over the unidirectional communication network 28.

The entertainment apparatus 102 is linked to the bi-directional communication network 16 with a link 14 between them. The computer system 20 is linked to with a link 18 between them. Likewise, the computer system 24 is linked to the wireless unidirectional communication network 28 with a link 26 between them. The portable information communication terminal 32 is linked thereto with a link 30 between them.

Next, the components of the data communication network system 10 will be described below.

The entertainment system 12 that is one of component systems of the data communication network system includes the entertainment apparatus 102. The entertainment apparatus reads various programs from an optical disk 156 that is a recording medium (large-capacity recording medium) capable of being mounted or dismounted freely, for example, a CD-ROM or digital video disk (DVD) ROM, and runs the programs. The entertainment apparatus has a communication facility for linking the entertainment apparatus to the bi-directional communication network 16 with the link 14 between them. Moreover, the entertainment apparatus acts as a client, which will be described later. In this case, client software employed within a communication network system is downloaded from the optical disk 156 or computer system 20.

The entertainment system 12 further includes the portable information communication terminal 32 that is freely attachable or detachable to or from the entertainment apparatus 102. The portable information communication terminal 32 can receive a radio-frequency signal through the link 30 over the unidirectional communication network 28. The portable information communication terminal is connected to the entertainment apparatus 102 through a connector or through radiocommunication such as infrared communication, and thus transmits or receives information to or from the entertainment apparatus.

The entertainment system 12 further includes a controller 108 connected to the entertainment apparatus 102 through a connector and a monitor 164 serving as a display device. A television set may be used as the monitor 164. The entertainment apparatus 102, controller 108, and monitor 164 may be assembled properly and thus integrated into an entertainment system.

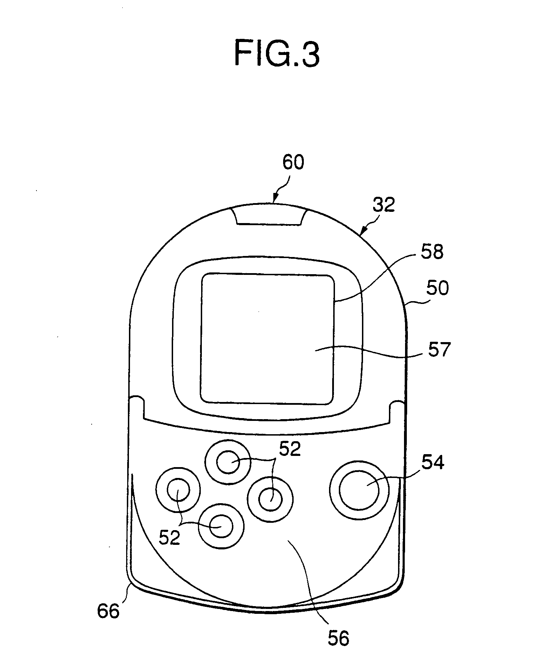

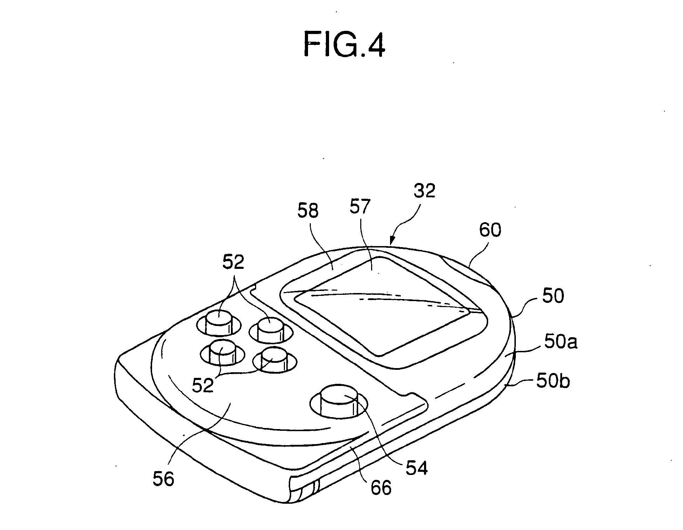

The portable information communication terminal 32 may decompress received compressed data according to information received through a built-in antenna 218 (see FIG. 2). The portable information communication terminal 32 may also display characters or images (still images and a motion picture) represented by the decompressed data on a screen 57 of the display device 58 (see FIG. 3 and FIG. 4). The characters and images may be displayed on a screen 201 of the monitor 164 via the entertainment apparatus 102.

The computer system 20 or computer system 24 consists of a main computer 20a or 24a with a built-in large-capacity recording medium, a monitor 20b or 24b, a keyboard 20c or 24c serving as an input means, and a mouse 20d or 24d.

The computer system 20 acting as a server receives a data set, which contains an identification (ID) number and a desired service request, from the entertainment system 12 acting as a client. The computer system 20 instructs the computer system 24 to perform predetermined processing. Client software to be employed within a communication network system is stored in the computer system 20 and may be downloaded to the entertainment apparatus 102.

In response to an instruction sent from the computer system 20, the computer system 24 retrieves an own database or retrieves a database or the like included in another computer system (not shown) via the link 22 such as a LAN, or performs required data processing. Incidentally, the computer system 20 and computer system 24 may be integrated into one computer system.

A network constructed by a local telephone company, a CATV company, a cellular telephone company, or the like, or the Internet to be connected via an Internet service provider (ISP) may be adopted as the bi-directional communication network 16 that is one of communication systems.

A wireless reading system (pager system or pocket bell system), a network constructed by a service provider, data broadcasting based on telecasting, data broadcasting based on satellite communication, data broadcasting based on telephony using a communication satellite may be adopted as the wireless unidirectional communication network 28. In the example shown in FIG. 1, data broadcasting based on satellite communication is adopted as the wireless unidirectional communication network 28. The data broadcasting is realized using a transmission station 40 having a transmission antenna 39 and a communication satellite 42 having an antenna for reflecting radio waves sent through the transmission antenna 39 towards the Earth.

Connection between a component system and a communication system and connection between component systems will be described below.

A channel 34 assigned to analog telephony, digital telephony, cable television (CATV), wireless portable telephony, or personal handyphone system may be adopted as the link 14 for linking the entertainment apparatus 102 and bi-directional communication network 16.

A dial-up service for establishing a path using a telephone line 36 when a telephone number is dialed or a leased-line service may be adopted as the link 18 for linking the bi-directional communication network 16 and computer system 20.

A LAN or WAN enabling high-speed transmission may be adopted as the link 22 for linking the computer system 20 and computer system 24.

A dial-up service for establishing a path using a telephone line 38 or a leased-line service may be adopted as the link 26 for linking the computer system 24 and wireless unidirectional communication network 28 similarly to the link 18.

Radiocommunication using microwaves or the like may be adopted as the link 30 for linking the wireless unidirectional communication network 28 and portable information communication terminal 32.

### (Details of a portable information terminal)

FIG. 3, FIG. 4, and FIG. 5 show the appearance of the portable information communication terminal 32. As shown in the drawings, the portable information communication terminal 32 consists of a housing 50, an operator unit 56, a display unit 58, a window 60, and a built-in wireless antenna (reception antenna) 218 (see FIG. 2). One or a plurality of direction buttons 52 and a decision button 54 to be used to input an event or perform various selections are formed on the operator unit 56. The display unit 58 is realized with a liquid crystal display device and has a screen 57. Radiocommunication with the portable information communication terminal 32 or entertainment apparatus 102 is achieved using infrared waves or the like through the window 60. A radio-frequency signal is received from the communication satellite 42 through the antenna 218.

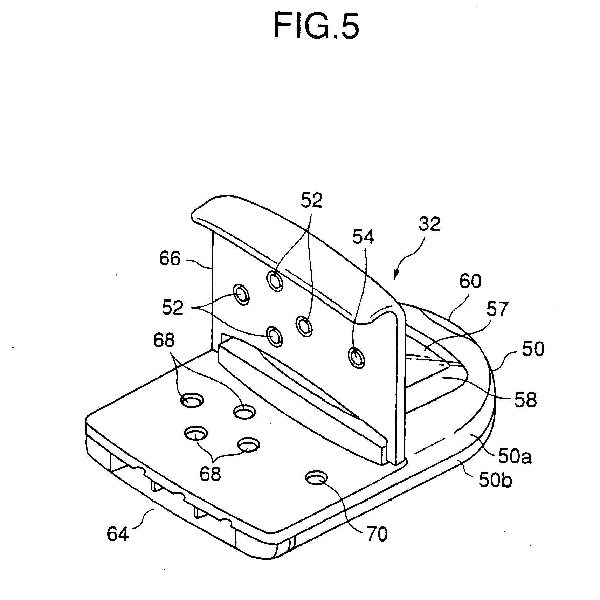

The housing 50 is, as shown in FIG. 4 and FIG. 5, composed of an upper shell 50a and a lower shell 50b. A printed-circuit board (not shown) on which a CPU, a memory element, and others are mounted is stowed in the housing 50.

The operator unit 56 occupies substantially a half of the face of the housing 50, and is formed on an opposite side relative to the window 60. As shown in FIG. 5, the operator unit 56 is shaped substantially like a square and borne to be able to pivot by a predetermined angle with respect to the housing 50. The operator unit 56 consists of a lid member 66 having the direction buttons 52 and decision button 54 and switch pressers 68 and 70 located to be pressed with the buttons formed on the lid member 66 that is an integral part of the housing 50. A connector 64 is formed at an edge of the operator unit 56.

The direction buttons 52 and decision button 54 are penetrating through the lid member 66, and borne by the lid member 66 so that they can move in directions in which they jut from the face of the lid member 66 or sink below the face thereof. The switch pressers 68 and 70 each have a pressing piece that is borne by the housing 50 and movable in directions in which the pressing piece juts from the face of the housing 50 or sink below the face thereof. When the pressing piece is pressed from above, it presses, for example, a diaphragm switch mounted on the printed-circuit board (not shown) incorporated in the housing 50.

The switch pressers 68 and 70 are located at positions that coincide with the positions of the direction buttons 52 and decision button 54 with the lid member 66 closed. Assume that the direction buttons 52 and decision button 54 are pressed to sink below the face of the lid member 66 with the lid member 66 closed. In this case, the direction buttons 52 and decision button 54 press associated push-button switches incorporated in the housing 50 via the pressing pieces of the switch pressures 68 and 70.

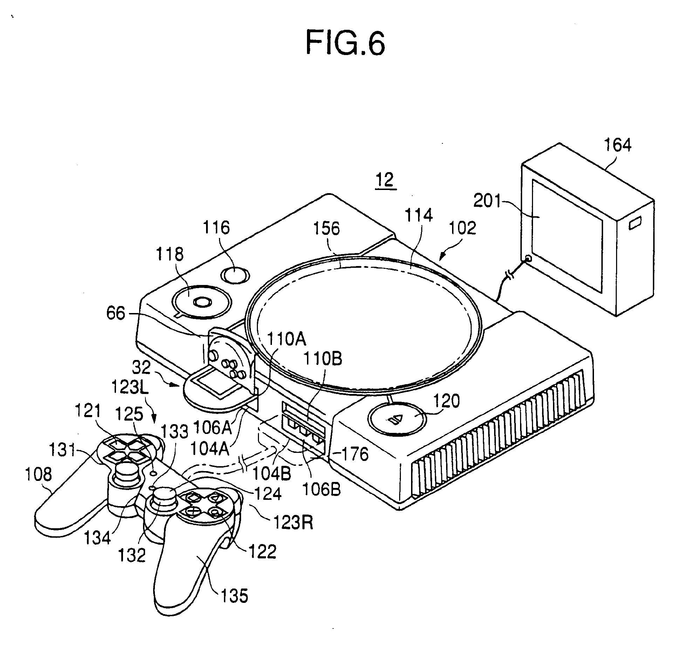

FIG. 6 is an oblique view showing the configuration of the entertainment system 12 with the portable information communication terminal 32 attached to the entertainment apparatus 102 (see also FIG. 1).

The entertainment system 12 consists of, as shown in FIG. 6, the entertainment apparatus 102, controller 108, portable information communication terminal 32, and monitor 164. The entertainment apparatus 102 serves as a parent machine relative to the portable information communication terminal 32. The controller 108 can be freely connected or disconnected to or from the entertainment apparatus 102 through an insertion section 106A or 106B that is a lower portion of a slot 104A or 104B. The portable information communication terminal 32 can be freely loaded or unloaded into or from an insertion section 110A or 110B, which is an upper portion of the slots 104A or 104B, with the lid member 66 opened. The monitor 164 is a display device such as a television set to which a video or voice signal output from the entertainment apparatus 102 is fed. Incidentally, a memory card (not shown) with a built-in flash memory in which the progress of a game is recorded may be inserted in the insertion section 110A or 110B of the entertainment apparatus 102. The portable information communication terminal 32 has the capability of the memory card.

The entertainment apparatus 102 consists of a disk mount 114, a reset switch 116, a power switch 118, a disk operation switch 120, and the foregoing two slots 104A and 104B. The optical disk 156 such as a DVD-ROM or CD-ROM that is a large-capacity recording medium is mounted on the disk mount 114. The disk control switch 120 is used to mount the optical disk 156.

The controller 108 connected to the entertainment apparatus 102 has first and second control units 121 and 122, a left button 123L, a right button 123R, a start button 124, and a selection button 125. The controller 108 further includes control units 131 and 132, a mode selection switch 133, and an indicator 134. The control units 131 and 132 are used to given control in an analog form. The mode selection switch 133 is used to select an operation mode in which the control units 131 and 132 are operated. The indicator 134 indicates the selected operation mode. All the elements except the indicator 134 shall be referred to as a control key unit 135 for a better understanding.

The entertainment apparatus 102 reads programs from the optical disk 156 mounted on the disk mount 114, displays images on the monitor 164 in response to an instruction entered at the controller 108 by a user (for example, an instruction for activating a game player), and outputs voice. Thus, for example, a game is executed. When it says that a game is executed, it means that the progress of a game is controlled and displayed images and output voice are controlled at the same time.

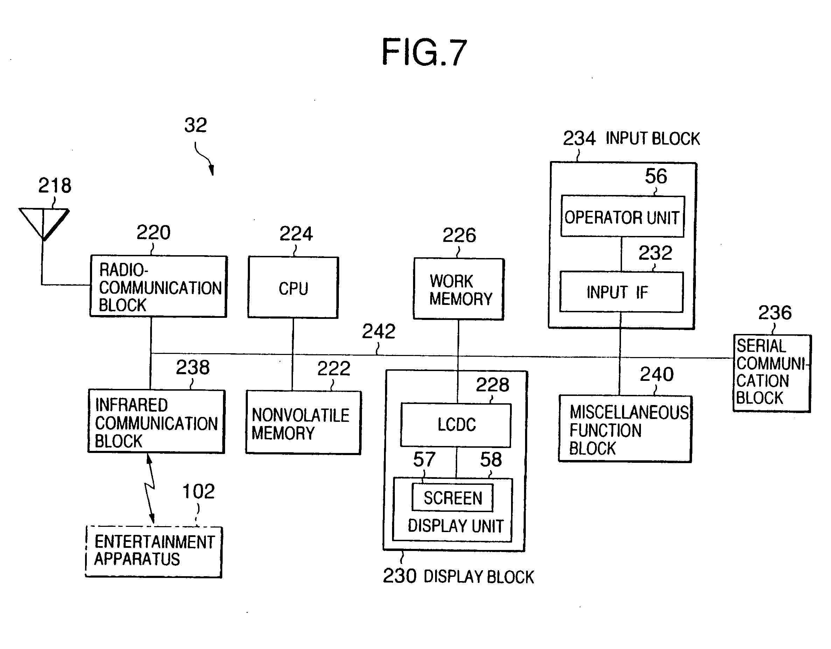

FIG. 7 is a circuit block diagram showing the circuitry of the portable information communication terminal 32. The portable information communication terminal 32 functions basically as a computer. The portable information communication terminal 32 consists of a radiocommunication block 220, a CPU 224, a work memory 226, an input block 234, a serial communication block 236, an infrared communication block 238, a nonvolatile memory 222, a display block 230, and a miscellaneous function block 240. These functional blocks 220, 222, 224, 226, 230, 234, 238, 240, and 236 are interconnected over a bus 242.

The radiocommunication block 220 functions as a radio-frequency signal receiver for receiving a radio-frequency signal such as a microwave sent (broadcast) over the unidirectional communication network 28 through the antenna 218.

The CPU 224 and work memory 226 enable programs or data preserved in the nonvolatile memory 222 to become active in the portable information communication terminal 32.

The input block 234 consists of the operator unit 56 and an input interface (IF) 232 for interfacing the operator unit.

The serial communication block 236 enables serial communication when the portable information communication terminal 32 is physically connected to the entertainment apparatus 102 through a connector.

The infrared communication block 238 is used to perform infrared communication between the portable information communication terminal 32 and another portable information communication terminal 32 or the entertainment apparatus 102. The infrared communication block 238 also functions as a radio-frequency signal receiver.

The nonvolatile memory 222 is realized with a flash memory and functions as a memory for making the portable information communication terminal compatible with a memory card.

The display block 230 consists of a liquid crystal display controller (LCDC) 228 that may also function as a display control unit and the display unit 58 having the screen 57.

The miscellaneous function block 240 has the ability to control a power supply.

Actions to be performed in the portable information communication terminal 32 will be described briefly. An identification number indicating receivable information is stored as data in the nonvolatile memory 222. When the radiocommunication block 220 receives data, an identification number contained in the header of the received data is compared with the identification number stored in the nonvolatile memory 22. Only when the identification numbers agree with each other, the data is read and preserved in the nonvolatile memory 222 via the work memory 226.

As the identification number indicating receivable information, data of an identification (PDA ID) number with which the portable information communication terminal 32 itself is identified is stored in the nonvolatile memory 222. The PDA ID number is, for example, a serial production number or a password appended to the portable information communication terminal 32 when the portable information communication terminal is purchased. When data received by the portable information communication terminal 32 is processed by the entertainment apparatus 102 connected thereto, an EMA ID number that will be described later and is read from the entertainment apparatus 102 may be stored in the nonvolatile memory 222. Data of a user identification (PDA user ID) number that is entered at the operator unit 56 by the user of the portable information communication terminal 32 and with which the user is identified is also stored in the nonvolatile memory 222.

### (Details of the entertainment apparatus)

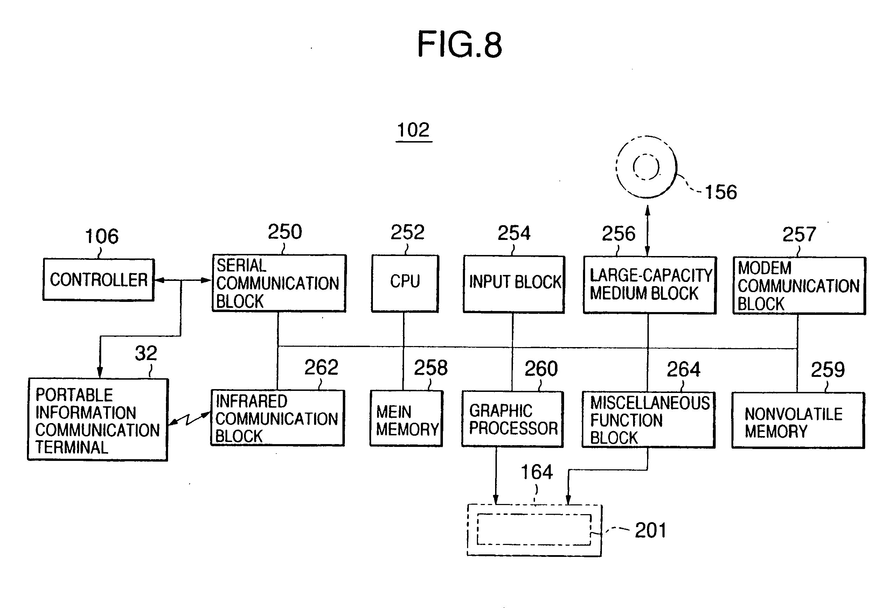

FIG. 8 is a circuit block diagram showing the circuitry of the entertainment apparatus 102. The entertainment apparatus 102 consists of a serial communication block 250, a CPU 252, an input block 254, a large-capacity medium block (large-capacity recording medium block) 256, a modem communication block 257, an infrared communication block 262, a main memory 258, a graphic processor 260, a miscellaneous function block 264, and a nonvolatile memory 259. These blocks are interconnected over a bus 266.

The serial communication block 250 has the ability to perform serial communication with external equipment. The serial communication block 250 is electrically connected to the serial communication block 236 incorporated in the portable information communication terminal 32 or the serial communication block (not shown) incorporated in the controller 108. Thus, data can be communicated between the entertainment apparatus 102 and the portable information communication terminal 32 or the controller 108.

The input block 254 has the capability of an input control unit, and enables a user to enter various kinds of information.

The large-capacity medium block 256 reads various programs or data from the optical disk 156 that is one of large-capacity package media.

The modem communication block 257 includes a modem serving as a signal conversion unit. The modem communication block 257 converts data produced by the portable information communication terminal 32 or entertainment apparatus 102 into an analog form, and transmits the data in the form of an analog signal over the line 34 used to realize the link 14. The modem communication block 257 places a data signal, which is sent from the server system 20 or sent over the bi-directional communication network 16, in the main memory 258. Otherwise, the modem communication block 257 converts an analog signal sent from the server system 20 or sent over the bi-directional communication network 16 into a data signal, and places the data signal in the main memory 238. When a digital line is used to realize the link 14, a digital service unit (DSU) communication block having a DSU as a signal conversion unit may be substituted for the modem communication block 257. Needless to say, the entertainment apparatus 102 may include both the modem communication block 257 and DSU communication block.

The main memory 258 is a memory means in which various kinds of data are stored. For example, application software is stored in the main memory 258. Furthermore, data sent from the portable information communication terminal 32 or controller 108 via the serial communication block 250 and data sent from the portable information communication terminal 32 via the infrared communication block 262 are stored in the main memory 258.

The graphic processor 260 is designed to process images. For example, the graphic processor 260 processes images displayed on the screen 201 (see FIG. 6) of the monitor 164 as graphics, for example, as polygon graphics.

The miscellaneous function block 264 has any ability other than those of the foregoing blocks, and is, for example, a power supply block or a connection block for connecting the entertainment apparatus to a memory card that is one of recording media or the portable information communication terminal 32.

Data of an identification number with which the entertainment apparatus 102 is identified, for example, a serial production number (entertainment apparatus (EMA) ID number) is stored in the nonvolatile memory 259. Moreover, data of a user identification number (EMA user ID number) with which the user of the entertainment apparatus 102 is identified and which is entered at the controller 106 by the user is stored in the nonvolatile memory 259.

The CPU 252 controls the foregoing blocks 257, 260, 258, 254, 256, and 264.

### (Connection between the entertainment apparatus and portable information communication terminal)

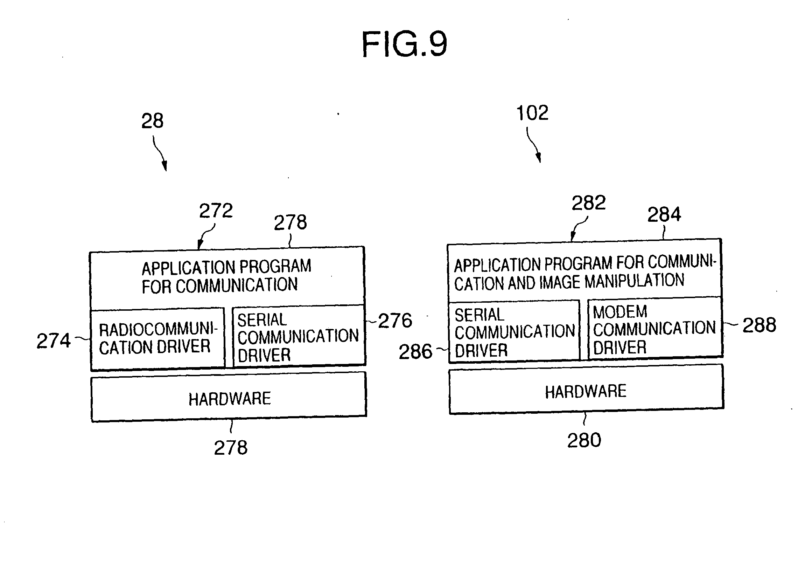

FIG. 9 indicates the logical relationship between the entertainment apparatus 102 and the portable information communication terminal 32 connected to the entertainment apparatus 102.

The portable information communication terminal 32 has hardware 270 (including the antenna 218) and software 272. The hardware 270 processes data received through the antenna 218 (see FIG. 7). The software 272 includes a radiocommunication driver 274, a serial communication driver 276, and an application program 278 for communication which enable the hardware 270 to perform communications.

The hardware 270 of the portable information communication terminal 32 consists of blocks that are interconnected over the bus 178 as shown in FIG. 7, such as, the CPU 224 and radiocommunication block 220. The radiocommunication block 220 has its data reception controlled by the radiocommunication driver 274 that is a program. The CPU 224 controls the aforesaid blocks according to, for example, various programs including the application program 278 for communication included in the software 272.

The entertainment apparatus 102 consists of hardware 280 and software 282 for controlling the hardware 280, communicating data, and manipulating images. The software 282 has an application program for communication and image manipulation 284 that includes a serial communication driver 286 and a model communication driver 288.

The hardware 280 of the entertainment apparatus 102 consists of blocks interconnected over the bus 266 as shown in FIG. 8, such as, the CPU 252, serial communication block 250, and model communication block 257. The serial communication block 250 has its communication controlled by the serial communication driver 286 included in the application program 282. The model communication block 257 has its communication controlled by the model communication driver 288.

The CPU 252 has the ability to control the foregoing blocks according to, for example, various programs including the application program for communication and image manipulation 284 included in the software 282.

The entertainment apparatus 102 and portable information communication terminal 32 having the aforesaid components are physically connected to each other with the connector 64 of the portable information communication terminal 32 (see FIG. 5) spliced to the connector (not shown) of the insertion section 110A of the entertainment apparatus 102. Alternatively, the entertainment apparatus 102 and portable information communication terminal 32 are electrically connected to each other by wireless owing to the infrared communication blocks 262 and 238 thereof.

### (Actions to be performed in the data communication network system)

Next, actions to be performed in the data communication network system will be described below.

When the portable information communication terminal 32 and entertainment apparatus 102 are electrically connected to each other, the entertainment apparatus 102 reads an inherent identification number (PDA ID number) from the nonvolatile memory 222 included in the portable information communication terminal 32. When it says that the portable information communication terminal 32 and entertainment apparatus 102 are electrically connected to each other, it means that the portable information communication terminal 32 is, as shown in FIG. 1, attached to the entertainment apparatus 102. Otherwise, it means that although the portable information communication terminal 32 is not actually attached to the entertainment apparatus 102, infrared communication is enabled.

The entertainment apparatus 102 downloads client software from the optical disk 156 or computer system (server) 20, and runs the client software. Owing to the running client software, the entertainment apparatus 102 is connected to the computer system 20 that is a server over the bi-directional communication network 16.

Thereafter, the entertainment apparatus 102 transmits a data set to the computer system 20 through a user interface provided by the client software over the bi-directional communication network 16. The data set is composed of a user identification number, user attributes that are user's properties (for example, a registered name, a password, a watchword, and an account number), added information produced by the entertainment apparatus 102, and service request information.

The computer system 20 transmits a command responsive to the data set, which is received from the entertainment system 12 and contains the PDA ID number and service request information, to the computer system 24 having a database over the link 22 realized with a LAN or the like.

The computer system 24 retrieves information associated with a service request from the database or processes data associated therewith and normally compresses the information or data. The compressed data is then divided into a plurality of frames (in which data is transmitted) each having the PDA ID number specified in a header (address division) thereof. The frames are then transmitted (broadcast) to the portable information communication terminal 32 through the link 30 realized with radiocommunication over the unidirectional communication network 28. In this case, the portable information communication terminal 32 compares the PDA ID number specified in each of the received frames with its own PDA ID number. The portable information communication terminal 32 whose PDA ID number agrees with the one specified in the frames can decompress the received data (compressed data) and thus reproduce it.

It may be the entertainment apparatus 102 connected to the portable information communication terminal 32 that reproduces received data.

The entertainment system 12 including the portable information communication terminal 32 can readily receive a reply to a desired request over a network. This kind of processing can be achieved in real time.

The foregoing actions are performed in a network of a basic configuration that is realized with a data processing system composed of an entertainment apparatus and a portable information communication terminal that are networked.

### [First Embodiment]

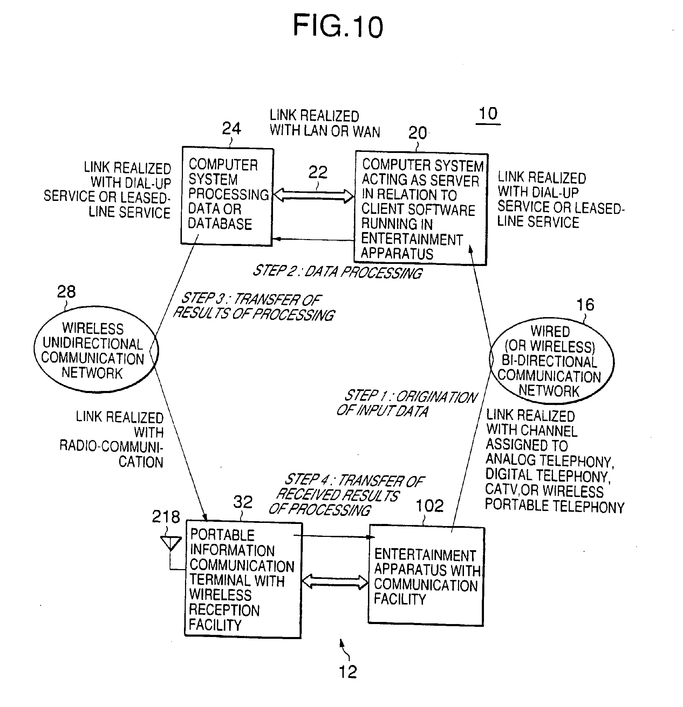

FIG. 10 shows a data processing system having the basic configuration shown in FIG. 1 and FIG. 2 and including a networked entertainment system 12. In the data processing system, a data set sent from the entertainment apparatus 102 is transmitted to the computer system 20 acting as a server over the bi-directional communication network 16. The data set is then processed by the computer system 24 processing data or a database. The processed data is sent to the portable information communication terminal 32 over the wireless unidirectional communication network 28. The portable information communication terminal 32 transfers the received results of processing to the entertainment apparatus 102.

Examples of the data processing system include a selective news distribution system, an online banking system, and an electric image sale system.

The news distribution system includes the entertainment apparatus 102 with a communication facility in which client software for news distribution criteria setting runs. The entertainment apparatus 102 transmits a data set containing news distribution criteria to the computer system 20 acting as a server. The news distribution criteria include a category of user-desired news information, a maximum number of news information items to be transmitted at one time, and a transmission frequency (the number of times a day).

The computer system 20 transmits a command, which is responsive to a PDA ID number and a service request including the news distribution criteria, to the computer system 24 having a database over the link 22 realized with a LAN or the like. The PDA ID number and service request are received from the entertainment system 12.

The computer system 24 has a database of user information and has the ability to distribute news to a portable information communication terminal according to user-specific distribution criteria. The computer system 24 selects desired news information from a news information database that is updated from time to time, and distributes the news information to the portable information communication terminal 32 designated as the destination of the news information.

The online banking system includes the entertainment apparatus 102 with a communication facility in which client software for online banking runs. The entertainment apparatus 102 transmits a data set, which contains, for example, a user's account number, a user's name, and a user's password, to the computer system 20 acting as an online banking server.

The computer system 20 transmits a command, which is responsive to a PDA ID number and a service request received from the entertainment system 12, to the computer system 24 having a database over the link 22 realized with a LAN or the like.

The computer system 24 has a database of users' account numbers and has the ability to transmit data to a portable information communication terminal. The computer system 24 processes a desired transaction and transmits the results of processing to the portable information communication terminal 32 over the wireless unidirectional communication network 28.

The electronic image sale system includes the entertainment apparatus 102 with a communication facility in which client software for electronic image online purchase runs. The entertainment apparatus 102 transmits a data set, which contains a service request having, for example, a serial number of a desired electronic image, a size thereof, and a file format specified therein, to the computer system 20 acting as an electronic image online purchase server.

The computer system 20 transmits a command, which is responsive to a PDA ID number and the service request for purchase of an electronic image received from the entertainment system 12, to the computer system 24 having a database over the link realized with a LAN or the like.

The computer system 24 has a database of electronic images and has the ability to transmit electronic images to a portable information communication terminal. The computer system 24 selects an electronic image in response to the service request, determines a portable information communication terminal that is the destination of the electronic image, and charges for the purchased electronic image. Preferably, the computer system 24 has the ability to electronically watermark data. An electronic watermark is superimposed on data in order to prevent unauthorized copying, whereby compressed data is produced. The compressed data is then distributed together with charging information to the portable information communication terminal 32.

As mentioned above, a service request and input data are transmitted from the entertainment system 12 to the computer system 20 or 24 over the bi-directional communication network. Processing responsive to a desired service request and input data is then carried out, and the results of processing responsive to the desired service request are acquired via the portable information communication terminal over the unidirectional communication network.

The flow of data shown in FIG. 10 is determined with a sequence of steps. Namely, at step 1, the entertainment apparatus 102 originates input data. At step 2, the computer system 20 or 24 processes data. At step 3, the results of processing are transferred to the portable information communication terminal 32. At step 4, the portable information communication terminal 32 transfers the received results to the entertainment apparatus 102.

The data processing system shown in FIG. 10 is not limited to the aforesaid examples. Another examples include an online lot drawing system and a security sale system similar to the banking system.

In the online lot drawing system, for example, the entertainment apparatus 102 transmits a data set, which contains necessary items such as a name and an address, to the computer system 20 acting as a server. The computer system 20 or 24 draws lots and transmits the results of lot drawing to the portable information communication terminal 32 whose user may have drawn a winning or losing number.

In the security sale system, the entertainment apparatus 102 transmits necessary items. The computer system 20 or 24 that is a main frame installed in the department of accountants in a bank performs financing and transmits the results of financing to the portable information communication terminal 32.

### [Second Embodiment]

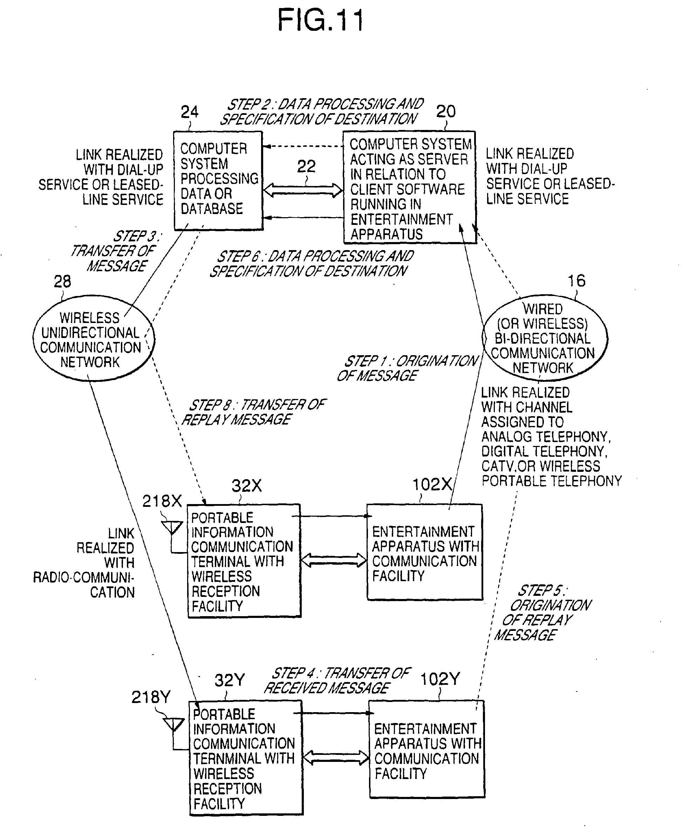

FIG. 11 shows a networked asynchronous message exchange system including two entertainment systems each composed of a portable information communication terminal 32X or 32Y and an entertainment apparatus 102X or 102Y. In the asynchronous message exchange system, while the computer system 20 or 24 processes data and specifies a destination of a message. Thus, the results of processing are transferred to a portable information communication terminal belonging to an entertainment system different from an entertainment system that is the source of the message. Thus, messages can be exchanged asynchronously. Noted is that the results of processing may be transferred to a portable information communication terminal belonging to an entertainment system that is the source of a message.

Referring to FIG. 11, a data set containing a message and being sent from the entertainment apparatus 102 included in the entertainment system is processed and then sent to the portable information communication terminal 32Y. The message received by the terminal 32Y is transferred to the entertainment apparatus 102Y. A data set containing a reply message and sent from the entertainment apparatus 102Y is processed and then returned to the portable information communication terminal 32X. A loop is thus constructed.

Consequently, the entertainment apparatus 102X originates a message at step 1. The computer system 20 or 24 processes data and specifies the destination of the message at step 2. The computer system 24 transfers the message at step 3. The portable information communication terminal 32Y transfers the received message at step 4. The entertainment apparatus 102Y originates a reply message at step 5. The computer system 20 or 24 processes data and specifies the destination of the reply message at step 6. The computer system 24 transfers the reply message at step 7. Thus, messages are exchanged asynchronously. In this case, the messages are transmitted over the bi-directional network 16 and wireless unidirectional communication network 28 in the same manner as described in FIG. 2 or FIG. 10.

### [Third Embodiment]

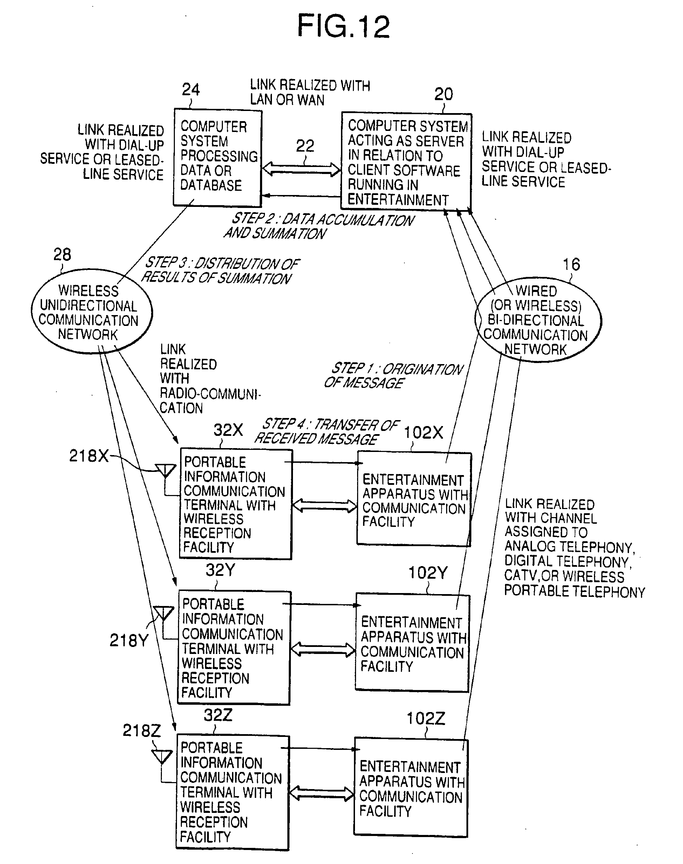

FIG. 12 shows a networked asynchronous data summation and results distribution system in accordance with another embodiment of the present invention. The system includes three entertainment systems each composed of a portable information communication terminal 32X, 32Y, or 32Z and an entertainment apparatus 102X, 102Y, or 102Z. In the asynchronous data summation and results distribution system, the computer system 20 or 24 accumulates and summates data, and distributes the results of summation to the portable information communication terminals 32X, 32Y, and 32Z.

Referring to FIG. 12, the entertainment apparatuses 102X, 102Y, and 102Z included in the three entertainment systems each originate a data set containing a message. The computer system 20 or 24 accumulates and summates data sets, and distributes the results of summation to the portable information communication terminals 32X, 32Y, and 32Z over the unidirectional communication network 28. Thus, a network loop is constructed.

Consequently, the entertainment apparatuses 102X, 102Y, and 102Z each originate a message at step 1. The computer system 20 or 24 accumulates and summates data at step 2. The computer system 24 distributes the results of summation at step 3. The portable information communication terminals 32X, 32Y, and 32Z each transfer the received message at step 4. Thus, data summation and distribution are carried out asynchronously.

The network systems in accordance with the embodiments shown in FIG. 10, FIG. 11, and FIG. 12 have been described based on the basic configuration shown in FIG. 2. According to the present invention, many other networks are conceivable. Anyhow, a portable information communication terminal with a wireless reception facility is assigned an inherent identification number (PDA ID number), includes an independent power supply, has portability, and has the ability to receive data by wireless. Thus, data can be received over a radiocommunication network.

Moreover, the entertainment apparatus is connected to a computer system having a database and acting as a server over a wireless or wired bi-directional communication network.

An entertainment system is connected to the computer system over the wired bi-directional communication network, while the computer system is connected to the entertainment system over a wireless unidirectional network. Thus, the systems are mutually connected in opposite directions using a combination of different networks, whereby a bi-directional network is constructed.

The entertainment apparatus runs client software downloaded from any of package media including a CD-ROM or from a computer system acting as a server. Owing to the running client software, the entertainment apparatus is connected to the computer system acting as a server over a network.

A data set can be transmitted to the computer system acting as a server over a network. The data set contains various kinds of data entered by a user through a user interface provided by the client software, such as, a user identification number and user attributes, and added information produced by the entertainment apparatus.

A computer system processing data or a database processes a set of various data items received from, for example, a portable information communication terminal, processes a database, and retrieves data from the database using the data set as a retrieval key. Thus, the contents of the database are modified if necessary in order to obtain the results of data processing. The computer system retrieves data from the database using data sent from the entertainment apparatus as a retrieval key. The method of retrieval and the database from which data is retrieved may be determined according to a retrieval key for another computer system instructed by the entertainment apparatus.

The results of data processing sent from the computer system contain information, with which a portable information communication terminal that is a destination is specified, and transmitted information are sent to one or more portable information communication terminals, which are specified as destinations, over the unidirectional network.

When the portable information communication terminal is connected to the entertainment apparatus, the entertainment apparatus can receive the results of processing received by the portable information communication terminal. The client software can then be reused.

When the portable information communication terminal is realized as a CPU in which an independent processing system is installed, the portable information communication terminal may not have to be connected directly to the entertainment apparatus.

As described so far, according to the present invention, an entertainment system is included as an information processing terminal in a computer network. Thus, an unprecedented technological development can be expected.

A portable information communication terminal and an entertainment apparatus complement each other, thus realizing a novel facility.

Even when an entertainment apparatus serving as a parent machine is not operated, data can be distributed. Asynchronous communication can be realized.

The results of data processing are distributed over a wireless network. As long as a user carries a portable information communication terminal with him/her, the user is informed of the results of data processing.

Data sets sent from a plurality of entertainment apparatuses are accumulated and then processed. The results of processing are then distributed to a plurality of portable information communication terminals. Thus, an asynchronous voting system and a results distribution system can be realized.

## Claims

1. A communication network system having at least two entertainment systems (12) and a computer system (20,24), wherein:
said entertainment systems (12) each includes at least one entertainment apparatus (102), and at least one portable information communication terminal (32) with a wireless reception facility and having an identification number, the or each portable terminal (32) being paired with an entertainment apparatus (102), each said portable information communication terminal (32) being connectable to one of said entertainment apparatus (102);
said computer system (20,24) is operable to function as a server and is operable to process data and/or is connected to a database;
each ofsaid entertainment apparatuses (102) is connectable with said computer system (20,24) over a first communication network (16,34,36);
said computer system(20,24) is connectable to each of said portable information communication terminals (32) over a second wireless communication network (28);
and wherein the system is configured to perform the following steps:
an entertainment apparatus (102X) belonging to a first one of the entertainment systems originates a message to said computer system (20,24), the message including the identification number of a portable information communication terminal (32Y) belonging to a second one of the entertainment systems that is the destination of the message;
said computer system (20,24) processes data and/or obtains data from a database and specifies the destination of the message in response to the received message;
said computer system (20.24) transfers the message to the portable information communication terminal (102Y) belonging to the second entertainment system;
the portable information communication terminal (32Y) having received the message transfers the message to the entertainment apparatus (102Y) connected thereto;
the entertainment apparatus (102Y) originates a reply message to said computer system (20,24) in response to the transferred message;
said computer system (20,24) processes data and specifies the destination of the reply message in response to the received reply message;
said computer system (20,24) transfers the reply message to the portable information communication terminal (32X) belonging to the first entertainment system that has initially originated the message; and
said portable information communication terminal (32X) having received the reply message transfers the reply message to the entertainment apparatus (102X) connected thereto; and
an asynchronous message exchange system is thus constructed.

2. A communication network system according to claim 1, wherein each of said portable information communication terminals is electrically connected to its respective entertainment apparatus (102) through a connector or through radio communication.

3. A communication network system according to claim 1, wherein said computer system (20,24) consists of at least two computer systems, one of the computer systems (20) acts as a server, the other computer system (24) is connected to a database, and both the computer systems are connected to each other so that they can transfer data mutually.

4. A communication network system according to claim 1, wherein said communication network system is utilized as any of a selective news distribution system, an online banking system, an electronic image sale system, an online lot drawing system, and a security sale system.

5. A communication network system according to claim 1, wherein:
said entertainment system consists of at least three entertainment systems that are configured to perform the following steps:
an entertainment apparatus (102X) belonging to one of the entertainment systems transmits the request data to said computer system (20,24);
said computer system (20,24) transmits the result data to the portable information communication terminals (32Y,32Z) belonging to the other entertainment systems in response to the request data;and
an asynchronous data summation and results distribution system is thus constructed.

6. A communication network system according to claim 1, wherein said computer system (20,24) includes a first computer system (20) operable to function as the server and a second computer system (24) connectable to a database, wherein the request data from said entertainment apparatus is received by said first computer system (20), and the result data is transmitted from said second computer system (24) to said portable information communication terminal (32).

7. A communication network system according to claim 1, wherein said first wireless communication network (16) is a bidirectional wireless communication network (16) and wherein said second wireless communication network (28) is a unidirectional wireless communication network (28).

8. A communication method using a network system having at least two entertainment systems (12) and a computer system (20,24), wherein:
said entertainment systems (12) each includes at least one entertainment apparatus (102), and at least one portable information communication terminal (32) with a wireless reception facility and having an identification number, the or each portable terminal (32) being paired with an entertainment apparatus (102), each said portable information communication terminal (32) being connectable to one of said entertainment apparatus (102);
said computer system (20,24) functions as a server and processes data and/or is connected to a database;
each of said entertainment apparatuses (102) is connected with said computer system (20,24) over a first communication network (16,34,36);
said computer system(20,24) is connected to each of said portable information communication terminals (32) over a second wireless communication network (28);
and wherein the method comprises the following steps:
an entertainment apparatus (102X) belonging to a first one of the entertainment systems originates a message to said computer system (20,24), the message including the identification number of a portable information communication terminal (32Y) belonging to a second one of the entertainment systems that is the destination of the message;
said computer system (20,24) processes data and/or obtains data from a database and specifies the destination of the message in response to the received message;
said computer system (20.24) transfers the message to the portable information communication terminal (102Y) belonging to the second entertainment system;
the portable information communication terminal (32Y) having received the message transfers the message to the entertainment apparatus (102Y) connected thereto;
the entertainment apparatus (102Y) originates a reply message to said computer system (20,24) in response to the transferred message;
said computer system (20,24) processes data and specifies the destination of the reply message in response to the received reply message;
said computer system (20,24) transfers the reply message to the portable information communication terminal (32X) belonging to the first entertainment system that has initially originated the message; and
said portable information communication terminal (32X) having received the reply message transfers the reply message to the entertainment apparatus (102X) connected thereto; and
an asynchronous message exchange system is thus constructed.

9. A communication method according to claim 8,
wherein said message contains one or more data items selected from among, user attributes, added information produced by said entertainment apparatus, and service request information.

10. A communication method according to claim 8, wherein:
each of said entertainment apparatuses downloads client software from a package medium mounted thereon or from said computer system (20,24) acting as a server; and
owing to said client software, said entertainment apparatus is connected to said computer system acting as a server over said first communication network.

11. A communication method according to claim 8, wherein
said computer system (20,24) includes a first computer system (20) operable to function as the server and a second computer system (24) connectable to a database, and
the message from said first entertainment apparatus is received by said first computer system, and the result data is transmitted from said second computer system to said portable information communication terminal (32Y) of the second entertainment apparatus.

## Patentansprüche

1. Kommunikationsnetzwerksystem mit mindestens zwei Unterhaltungssystemen (12) und einem Computersystem (20, 24), wobei:
jedes der Unterhaltungssysteme (12) mindestens ein Unterhaltungsgerät (102) und mindestens ein tragbares Informationskommunikationsterminal (32) mit der Fähigkeit zum drahtlosen Empfang und mit einer Kennzahl aufweist, wobei das oder jedes tragbare Terminal (32) paarweise einem Unterhaltungsgerät (102) zugeordnet ist und wobei jedes tragbare Informationskommunikationsterminal (32) mit einem der Unterhaltungsgeräte (102) verbindbar ist;
das Computersystem (20, 24) so betreibbar ist, dass es als Server fungiert, und es so betreibbar ist, dass es Daten verarbeitet und/oder mit einer Datenbank verbunden ist;
jedes der Unterhaltungsgeräte (102) über ein erstes Kommunikationsnetzwerk (16, 34, 36) mit dem Computersystem (20, 24) verbindbar ist;
das Computersystem (20, 24) über ein zweites drahtloses Kommunikationsnetzwerk (28) mit jedem der tragbaren Informationskommunikationsterminals (32) verbindbar ist;
und wobei das System so konfiguriert ist, dass es die folgenden Schritte ausführt:
ein zu einem ersten der Unterhaltungssysteme gehörendes Unterhaltungsgerät (102X) löst eine Meldung an das Computersystem (20, 24) aus, die die Kennzahl eines tragbaren Informationskommunikationsterminals (32Y) enthält, das zu einem zweiten der Unterhaltungssysteme gehört, das das Ziel der Meldung bildet;
das Computersystem (20, 24) verarbeitet Daten und/oder erhält Daten von einer Datenbank und spezifiziert das Ziel der Meldung in Reaktion auf die empfangene Meldung;
das Computersystem (20, 24) überträgt die Meldung an das zum zweiten Unterhaltungssystem gehörende tragbare Informationskommunikationsterminal (102Y);
das tragbare Informationskommunikationsterminal (32Y), das die Meldung übertragen hat, überträgt dieselbe an das mit ihm verbundene Unterhaltungsgerät (102Y);
das Unterhaltungsgerät (102Y) löst auf die übertragene Meldung hin eine Antwortmeldung an das Computersystem (20, 24) aus;
das Computersystem (20, 24) verarbeitet Daten und spezifiziert das Ziel der Antwortmeldung auf die empfangene Antwortmeldung hin;
das Computersystem (20, 24) überträgt die Antwortmeldung an das tragbare Informationskommunikationsterminal (32X), das zum ersten Unterhaltungssystem gehört, das ursprüngliche die Meldung ausgelöst hat; und
das tragbare Informationskommunikationsterminal (32X) überträgt die Antwortmeldung, nachdem es diese empfangen hat, an das mit ihm verbundene Unterhaltungsgerät (102X); und
wobei auf diese Weise ein System zum asynchronen Austauschen von Meldungen gebildet ist.

2. Kommunikationsnetzwerksystem nach Anspruch 1, bei dem jedes der tragbaren Informationskommunikationsterminals über einen Verbinder oder Funkkommunikation elektrisch mit seinem jeweiligen Unterhaltungsgerät (102) verbunden ist.

3. Kommunikationsnetzwerksystem nach Anspruch 1, bei dem das Computersystem (20, 24) aus mindestens zwei Computersystemen besteht, von denen das eine (20) als Server dient, das andere (24) mit einer Datenbank verbunden ist, und beide Computersysteme so miteinander verbunden sind, dass sie Daten wechselseitig übertragen können.

4. Kommunikationsnetzwerksystem nach Anspruch 1, bei dem dasselbe als ein System zur selektiven Nachrichtenverteilung, Online-Bankingsystem, Verkaufssystem mittels elektronischer Bilder, Online-Losziehsystem oder Verkaufssystem unter Einhaltung von Sicherheitsbedingungen verwendet wird.

5. Kommunikationsnetzwerksystem nach Anspruch 1, bei dem:
das Unterhaltungssystem aus mindestens drei Unterhaltungssystemen besteht, die so konfiguriert sind, dass sie die folgenden Schritte ausführen:
ein zu einem der Unterhaltungssystem gehörendes Unterhaltungsgerät (102X) überträgt die Anforderungsdaten an das Computersystem (20, 24);
das Computersystem (20, 24) überträgt auf die Anforderungsdaten hin die sich ergebenden Daten an die zu den anderen Unterhaltungssystemen gehörenden tragbaren Informationskommunikationsterminals (32Y, 32Z); und
wobei auf diese Weise ist ein System zur asynchronen Datenzusammenfassung und zur Verteilung von Ergebnissen aufgebaut.

6. Kommunikationsnetzwerksystem nach Anspruch 1, bei dem das Computersystem (20, 24) ein erstes Computersystem (20), das so betreibbar ist, dass es als Server fungiert, und ein zweites, mit einer Datenbank verbindbares Computersystem (24) aufweist, wobei die Anforderungsdaten vom Unterhaltungsgerät durch das erste Computersystem (20) empfangen und die sich ergebenden Daten vom zweiten Computersystem (24) an das tragbare Informationskommunikationsterminal (32) übertragen werden.

7. Kommunikationsnetzwerksystem nach Anspruch 1, bei dem das erste drahtlose Kommunikationsnetzwerk (16) ein bidirektionales drahtloses Kommunikationsnetzwerk (16) ist und das zweite drahtlose Kommunikationsnetzwerk (28) ein unidirektionales drahtloses Kommunikationsnetzwerk (28) ist.

8. Kommunikationsverfahren unter Verwendung eines Netzwerksystems mit mindestens zwei Unterhaltungssystemen (12) und einem Computersystem (20, 24), wobei:
jedes der Unterhaltungssysteme (12) mindestens ein Unterhaltungsgerät (102) und mindestens ein tragbares Informationskommunikationsterminal (32) mit der Fähigkeit zum drahtlosen Empfang und mit einer Kennzahl aufweist, wobei das oder jedes tragbare Terminal (32) paarweise einem Unterhaltungsgerät (102) zugeordnet ist und wobei jedes tragbare Informationskommunikationsterminal (32) mit einem der Unterhaltungsgeräte (102) verbindbar ist;
das Computersystem (20, 24) so betreibbar ist, dass es als Server fungiert, und es so betreibbar ist, dass es Daten verarbeitet und/oder mit einer Datenbank verbunden ist;
jedes der Unterhaltungsgeräte (102) über ein erstes Kommunikationsnetzwerk (16, 34, 36) mit dem Computersystem (20, 24) verbindbar ist;
das Computersystem (20, 24) über ein zweites drahtloses Kommunikationsnetzwerk (28) mit jedem der tragbaren Informationskommunikationsterminals (32) verbindbar ist;
und wobei das Verfahren die folgenden Schritte beinhaltet:
ein zu einem ersten der Unterhaltungssysteme gehörendes Unterhaltungsgerät (102X) löst eine Meldung an das Computersystem (20, 24) aus, die die Kennzahl eines tragbaren Informationskommunikationsterminals (32Y) enthält, das zu einem zweiten der Unterhaltungssysteme gehört, das das Ziel der Meldung bildet;
das Computersystem (20, 24) verarbeitet Daten und/oder erhält Daten von einer Datenbank und spezifiziert das Ziel der Meldung in Reaktion auf die empfangene Meldung;
das Computersystem (20, 24) überträgt die Meldung an das zum zweiten Unterhaltungssystem gehörende tragbare Informationskommunikationsterminal (102Y);
das tragbare Informationskommunikationsterminal (32Y), das die Meldung übertragen hat, überträgt dieselbe an das mit ihm verbundene Unterhaltungsgerät (102Y);
das Unterhaltungsgerät (102Y) löst auf die übertragene Meldung hin eine Antwortmeldung an das Computersystem (20, 24) aus;
das Computersystem (20, 24) verarbeitet Daten und spezifiziert das Ziel der Antwortmeldung auf die empfangene Antwortmeldung hin;
das Computersystem (20, 24) überträgt die Antwortmeldung an das tragbare Informationskommunikationsterminal (32X), das zum ersten Unterhaltungssystem gehört, das ursprüngliche die Meldung ausgelöst hat; und
das tragbare Informationskommunikationsterminal (32X) überträgt die Antwortmeldung, nachdem es diese empfangen hat, an das mit ihm verbundene Unterhaltungsgerät (102X); und
wobei auf diese Weise ein System zum asynchronen Austauschen von Meldungen gebildet ist.

9. Kommunikationsverfahren nach Anspruch 8,
bei dem die Meldung einen oder mehrere Einzeldatenwerte enthält, die aus Benutzerattributen, durch das Unterhaltungsgerät erzeugter Zusatzinformation und Diensteanforderungsinformation ausgewählt sind.

10. Kommunikationsverfahren nach Anspruch 8, bei dem:
jedes der Unterhaltungsgeräte Clientsoftware von einem an ihm angebrachten Packagemedium oder vom als Server dienenden Computersystem (20, 24) herunterlädt; und
das Unterhaltungsgerät, dank dieser Clientsoftware, über das erste Kommunikationsnetzwerk mit dem als Server dienenden Computersystem verbunden wird.

11. Kommunikationsverfahren nach Anspruch 8, bei dem:
das Computersystem (20, 24) ein erstes Computersystem (20), das so betreibbar ist, dass es als Server fungiert, und ein zweites, mit einer Datenbank verbindbares Computersystem (24) aufweist; und
die Meldung vom ersten Unterhaltungsgerät durch das erste Computersystem empfangen wird und die sich ergebenden Daten vom zweiten Computersystem an das tragbare Informationskommunikationsterminal (32Y) des zweiten Unterhaltungsgeräts übertragen werden.

## Revendications

1. Système de réseau de communication comportant au moins deux systèmes de loisir (12) et un système d'ordinateur (20, 24), dans lequel :
lesdits systèmes de loisir (12) incluent chacun au moins un appareil de loisir (102) et au moins un terminal de communication d'information portable (32) disposant d'une capacité de réception sans fil et présentant un numéro d'identification, le ou chaque terminal portable (32) étant groupé par paire avec un appareil de loisir (102), chaque dit terminal de communication d'information portable (32) pouvant être connecté à l'un desdits appareils de loisir (102) ;
ledit système d'ordinateur (20, 24) est opérant pour fonctionner en tant que serveur et est opérant pour traiter des données et/ou est connecté à une base de données ;
chacun desdits appareils de loisir (102) peut être connecté avec ledit système d'ordinateur (20, 24) sur un premier réseau de communication (16, 34, 36) ;
ledit système d'ordinateur (20, 24) peut être connecté à chacun desdits terminaux de communication d'information portables (32) sur un second réseau de communication sans fil (28) ;
et dans lequel le système est configuré pour réaliser les étapes qui suivent :
un appareil de loisir (102X) qui appartient à un premier des systèmes de loisir est à l'origine d'un message sur ledit système d'ordinateur (20, 24), le message incluant le numéro d'identification d'un terminal de communication d'information portable (32Y) appartenant à un second des systèmes de loisir qui est la destination du message ;
ledit système d'ordinateur (20, 24) traite des données et/ou obtient des données à partir d'une base de données et spécifie la destination du message en réponse au message reçu ;
ledit système d'ordinateur (20, 24) transfère le message au terminal de communication d'information portable (102Y) appartenant au second système de loisir ;
le terminal de communication d'information portable (32Y) qui a reçu le message transfère le message à l'appareil de loisir (102Y) qui lui est connecté ;
l'appareil de loisir (102Y) est à l'origine d'un message de réponse sur ledit système d'ordinateur (20, 24) en réponse au message transféré ;
ledit système d'ordinateur (20, 24) traite les données et spécifie la destination du message de réponse en réponse au message de réponse reçu ;
ledit système d'ordinateur (20, 24) transfère le message de réponse au terminal de communication d'information portable (32X) appartenant au premier système de loisir qui a été initialement à l'origine du message ; et
ledit terminal de communication d'information portable (32X) qui a reçu le message de réponse transfère le message de réponse à l'appareil de loisir (1 02X) qui lui est connecté ; et
un système d'échange de message asynchrone est ainsi construit.

2. Système de réseau de communication selon la revendication 1, dans lequel chacun desdits terminaux de communication d'information portables est connecté électriquement à son appareil de loisir respectif (102) par l'intermédiaire d'un connecteur ou par l'intermédiaire d'une communication radio.

3. Système de réseau de communication selon la revendication 1, dans lequel ledit système d'ordinateur (20, 24) est constitué par au moins deux systèmes d'ordinateur, l'un des systèmes d'ordinateur (20) joue le rôle de serveur, l'autre système d'ordinateur (24) est connecté à une base de données et les deux systèmes d'ordinateur sont connectés l'un à l'autre de telle sorte qu'ils puissent transférer des données de façon mutuelle.

4. Système de réseau de communication selon la revendication 1, dans lequel ledit système de réseau de communication est utilisé en tant que n'importe quel système pris parmi un système de distribution sélective de nouvelles, un système bancaire en ligne, un système de vente d'images électroniques, un système de dessin en studio en ligne et un système de vente sécurisée.

5. Système de réseau de communication selon la revendication 1, dans lequel :
ledit système de loisir est constitué par au moins trois systèmes de loisir qui sont configurés pour réaliser les étapes qui suivent :
un appareil de loisir (102X) qui appartient à l'un des systèmes de loisir transmet les données de requête audit système d'ordinateur (20, 24) ;
ledit système d'ordinateur (20, 24) transmet les données de résultat aux terminaux de communication d'information portables (32Y, 32Z) appartenant aux autres systèmes de loisir en réponse aux données de requête ; et
un système de sommation de données asynchrone et de distribution de résultats est ainsi construit.

6. Système de réseau de communication selon la revendication 1, dans lequel ledit système d'ordinateur (20, 24) inclut un premier système d'ordinateur (20) opérant pour fonctionner en tant que serveur et un second système d'ordinateur (24) pouvant être connecté à une base de données, dans lequel les données demandées en requête depuis ledit appareil de loisir sont reçues par ledit premier système d'ordinateur (20) et les données de résultat sont transmises depuis ledit second système d'ordinateur (24) sur ledit terminal de communication d'information portable (32).

7. Système de réseau de communication selon la revendication 1, dans lequel ledit premier réseau de communication sans fil (16) est un réseau de communication sans fil bidirectionnel (16) et dans lequel ledit second réseau de communication sans fil (28) est un réseau de communication sans fil unidirectionnel (28).

8. Procédé de communication utilisant un système de réseau comportant au moins deux systèmes de loisir (12) et un système d'ordinateur (20, 24), dans lequel :
lesdits systèmes de loisir (12) incluent chacun au moins un appareil de loisir (102) et au moins un terminal de communication d'information portable (32) disposant d'une capacité de réception sans fil et présentant un numéro d'identification, le ou chaque terminal portable (32) étant groupé par paire avec un appareil de loisir (102), chaque dit terminal de communication d'information portable (32) pouvant être connecté à l'un desdits appareils de loisir (102) ;
ledit système d'ordinateur (20, 24) est opérant pour fonctionner en tant que serveur et est opérant pour traiter des données et/ou est connecté à une base de données ;
chacun desdits appareils de loisir (102) peut être connecté avec ledit système d'ordinateur (20, 24) sur un premier réseau de communication (16, 34, 36) ;
ledit système d'ordinateur (20, 24) peut être connecté à chacun desdits terminaux de communication d'information portables (32) sur un second réseau de communication sans fil (28) ;
et dans lequel le procédé comprend les étapes qui suivent :
un appareil de loisir (102X) qui appartient à un premier des systèmes de loisir est à l'origine d'un message sur ledit système d'ordinateur (20, 24), le message incluant le numéro d'identification d'un terminal de communication d'information portable (32Y) appartenant à un second des systèmes de loisir qui est la destination du message ;
ledit système d'ordinateur (20, 24) traite des données et/ou obtient des données à partir d'une base de données et spécifie la destination du message en réponse au message reçu ;
ledit système d'ordinateur (20, 24) transfère le message au terminal de communication d'information portable (102Y) appartenant au second système de loisir ;
le terminal de communication d'information portable (32Y) qui a reçu le message transfère le message à l'appareil de loisir (102Y) qui lui est connecté ;
l'appareil de loisir (102Y) est à l'origine d'un message de réponse sur ledit système d'ordinateur (20, 24) en réponse au message transféré ;
ledit système d'ordinateur (20, 24) traite les données et spécifie la destination du message de réponse en réponse au message de réponse reçu ;
ledit système d'ordinateur (20, 24) transfère le message de réponse au terminal de communication d'information portable (32X) appartenant au premier système de loisir qui a été initialement à l'origine du message ; et
ledit terminal de communication d'information portable (32X) qui a reçu le message de réponse transfère le message de réponse à l'appareil de loisir (102X) qui lui est connecté ; et
un système d'échange de message asynchrone est ainsi construit.

9. Procédé de communication selon la revendication 8, dans lequel ledit message contient un ou plusieurs éléments de données choisis parmi des attributs d'utilisateur, une information additionnée produite par ledit appareil de loisir et une information de requête de services.

10. Procédé de communication selon la revendication 8, dans lequel :
chacun desdits appareils de loisir décharge un logiciel de client depuis un support de module qui est monté dessus ou depuis ledit système d'ordinateur (20, 24) qui joue le rôle de serveur ; et
du fait dudit logiciel de client, ledit appareil de loisir est connecté audit système d'ordinateur qui joue le rôle de serveur sur ledit premier réseau de communication.

11. Procédé de communication selon la revendication 8, dans lequel :
ledit système d'ordinateur (20, 24) inclut un premier système d'ordinateur (20) opérant pour fonctionner en tant que serveur et un second système d'ordinateur (24) pouvant être connecté à une base de données ; et
le message en provenance dudit premier appareil de loisir est reçu par ledit premier système d'ordinateur et les données de résultat sont transmises depuis ledit second système d'ordinateur audit terminal de communication d'information portable (32Y) du second appareil de loisir.
